# EUROPEAN PATENT APPLICATION

(11) **EP 4 850 940 A1**
(43) Date of publication of application: **09.12.2026**
(21) Application number: 25747421.3
(22) Date of filing: 03.01.2025
(51) Int. Cl.: B60J 3/02, B60R 11/02

(54) **SUN VISOR SYSTEM, CONTROL METHOD, ELECTRONIC APPARATUS, VEHICLE, AND STORAGE MEDIUM**

(30) Priority: 31.01.2024 CN 202410155216
(71) Applicant: BYD Company Limited, Shenzhen, Guangdong 518118 (CN)
(72) Inventor: WU, Hengdong, Shenzhen, Guangdong 518118 (CN); ZHOU, Hai, Shenzhen, Guangdong 518118 (CN); YU, Bin, Shenzhen, Guangdong 518118 (CN); SI, Xiaoqing, Shenzhen, Guangdong 518118 (CN); HE, Jie, Shenzhen, Guangdong 518118 (CN)
(74) Representative: Mathys & Squire
(86) International application number: PCT/CN2025/070467
(87) International publication number: WO 2025/161845

(57) **Abstract**

A sun visor system (100), which is used for a vehicle (1000). The sun visor system (100) includes: a sun visor (10), a projection device (20) and a controller (30), wherein the projection device (20) is arranged on the sun visor (10); and the controller (30) is configured to identify the positions of eyeballs on the basis of a facial image and adjust the position of the sun visor on the basis of the positions of the eyeballs, so that the projection device projects an image to a field-of-view area of the eyeballs.

## Description

### CROSS-REFERENCE TO RELATED DISCLOSURES

The present disclosure claims the benefit of priority to Chinese Patent Disclosure No. "202410155216.9" on January 31, 2024, which is incorporated herein in its entirety.

### FIELD

The present disclosure relates to the technical field of sun visors, and in particular to a sun visor system, a control method, an electronic device, a vehicle, and a storage medium.

### BACKGROUND

In the related art, a projection device can be arranged on a sun visor of a vehicle to increase the function of the sun visor. When the vehicle is stopped, the projection device can project an image to the eyes, that is, the movie can be viewed through the sun visor, and the sun visor has an added entertainment function.

However, the posture may change during viewing, causing the position of the image projected by the projection device to deviate from the field of view of the eyeball, resulting in a poor viewing experience.

### SUMMARY

The disclosure aims to address at least one of the technical problems existing in the prior art. To this end, the disclosure provides a sun visor system including a sun visor, a projection device, and a controller. The projection device is disposed on the sun visor. The controller is configured to identify the position of an eyeball based on a facial image and adjust the position of the sun visor based on the eyeball position so that the projection device projects an image into the field of view area of eyeball.

Thus, in the sun visor system provided in the embodiments of the present disclosure, the controller can adjust the position of the sun visor according to the position of the eyeball, so that the projection device disposed on the sun visor projects the image into the field of view area of the eyeball. Even if the posture changes during viewing, the projection device can still project the image directly into the field of view area of the eyeball, thereby improving the viewing experience.

In some embodiments, the sun visor system includes a camera. The sun visor system includes a camera, and the camera is configured to obtain the facial image.

In some embodiments, the controller is configured to control the adjustment direction of the sun visor according to the movement direction of the position of the eyeball.

In some embodiments, the controller is specifically configured to: control the sun visor to swing along the front and rear directions of the vehicle according to the up and down movement of the position of the eyeball; and/or control the sun visor to swing along the left and right directions of the vehicle according to the left and right movement of the position of the eyeball.

In this way, when the head is raised or lowered, the position of the eyeball changes. The controller can determine the head-up action based on the identified eyeball position, and further determine the up and down movement of the eyeball position. Based on the head-up action, the controller controls the sun visor to swing in the front-to-back direction of the vehicle, so that the projection device arranged on the sun visor projects the image into the field of view area of the eyeball.

When the head is turned left or right, the position of the eyeball changes. The controller can determine the left-right movement of the eyeball based on the identified eyeball position and control the sun visor to swing in the left-right direction of the vehicle so that the projection device arranged on the sun visor projects an image into the field of view area of the eyeball.

In some embodiments, the controller is further configured to identify eye movements based on the facial image, and control the projection device to turn on or off based on the eye movements.

In this way, the projection device can be turned on or off by eye movements without manual operation, which increases the convenience of operation.

In some embodiments, the sun visor system includes a drive motor, and the controller is configured to control the drive motor to adjust the position of the sun visor according to the position of the eyeball.

In this way, the drive motor can drive the connecting structure arranged on the sun visor to move the sun visor, thereby changing the position of the sun visor, so that the projection device arranged on the sun visor projects the image to the field of view of the eyeball in real time.

In some embodiments, the sun visor system includes an optical waveguide module, the projection device is configured to determine a real information image based on an optical signal received by the optical waveguide module, and the projection device is configured to project the real information image.

In this way, when the projection device enters the working state, the incident light carrying the real information image can enter the optical waveguide module, and the projection device can project the real information image according to the incident light carrying the real information image.

In some embodiments, the projection device includes an image generation module, the image generation module is configured to generate a virtual image, the image generation module is configured to fuse the real information image and the virtual image to obtain a fused image, and the projection device is configured to project the fused image.

In this way, the image generation module can generate a virtual image. The image generation module can also generate a corresponding real image based on the optical signal received by the optical waveguide module. The projection device can project the virtual image generated by the image generation module or the generated real image.

In some embodiments, the sun visor system includes a sun visor, and the projection device further includes an image generation module, wherein the image generation module is configured to generate a virtual image, and when the sun visor isolates the optical wave signal received by the optical waveguide module, the projection device is configured to project the virtual image.

In this way, the light shield can cover the coupling grating of the optical waveguide module, preventing ambient incident light from entering the coupling grating. The image generation module cannot generate a corresponding real information image based on the optical wave signal received by the optical waveguide module. In this case, the image projected by the projection device can be a virtual image generated by the image generation module.

The control method provided in the embodiment of the present disclosure is used for a vehicle, including: the position of the eyeball is identified based on a facial image; the position of the sun visor of the vehicle is adjusted according to the position of the eyeball so that the projection device arranged on the sun visor projects the image onto the field of view area of the eyeball.

In some embodiments, the position of the sun visor adjusted according to the position of the eyeball includes: the adjustment direction of the sun visor is controlled according to the moving direction of the position of the eyeball.

In some embodiments, the position of the sun visor adjusted according to the position of the eyeball includes: the sun visor controlled to swing along the front-to-back direction of the vehicle according to the up and down movement of the position of the eyeball; and/or the sun visor is controlled to swing along the left-to-right direction of the vehicle according to the left-to-right movement of the position of the eyeball.

In some embodiments, the control method further includes: eye movements are identified based on the facial image; and the projection device is controlled to turn on or off based on the eye movements.

The electronic device provided in the embodiments of the present disclosure includes a memory and a processor, wherein the memory is used to store a computer program, and the processor implements the control method of any one of the above embodiments when executing the computer program.

The vehicle provided in the embodiments of the present disclosure includes the sun visor system or electronic device of any one of the above embodiments.

The computer-readable storage medium provided in the embodiments of the present disclosure is used to store a computer program, and the computer program implements the control method of any of the above embodiments when executed by a processor.

The embodiments of the present disclosure provide a sun visor system, a control method, an electronic device, a vehicle, and a storage medium. The vehicle includes a sun visor system. The sun visor system includes a sun visor, a projection device, and a controller. The projection device is arranged on the sun visor. The controller is configured to identify the position of the eyeball based on a facial image and adjust the position of the sun visor based on the position of the eyeball so that the projection device projects the image onto the field of view of the eyeball. The controller can adjust the position of the sun visor based on the position of the eyeball so that the projection device arranged on the sun visor projects the image onto the field of view area of the eyeball. Even if the posture changes during viewing, the projection device can project the image directly onto the field of view area of the eyeball, thereby improving the viewing experience.

Additional aspects and advantages of the present disclosure will be given in part in the description below, and in part will become obvious from the description below, or will be learned through practice of the present disclosure.

### BRIEF DESCRIPTION OF THE DRAWINGS

The above and/or additional aspects and advantages of the present disclosure will become apparent and easily understood from the description of the embodiments in conjunction with the following drawings, in which:
FIG.1 is a schematic diagram of a sun visor system and a vehicle according to certain embodiments of the present disclosure;
FIG.2 is a schematic structural diagram of a sun visor and a vehicle according to certain embodiments of the present disclosure;
FIG.3 is a flow chart of a control method according to certain embodiments of the present disclosure;
FIG.4 is a schematic diagram of the working process of a projection device according to certain embodiments of the present disclosure;
FIG.5 is a schematic plan view of the structure of a sun visor system according to certain embodiments of the present disclosure;
FIG.6 is a schematic diagram of a projection device according to certain embodiments of the present disclosure.

Reference numerals: sun visor system 100, vehicle 1000, sun visor 10, projection device 20, optical waveguide module 21, image generation module 22, controller 30, camera 40, drive motor 50.

### DETAILED DESCRIPTION

The following describes in detail embodiments of the present disclosure, examples of which are shown in the accompanying drawings, wherein the same or similar reference numerals throughout represent the same or similar elements or elements having the same or similar functions. The embodiments described below with reference to the accompanying drawings are exemplary and are intended to be used to explain the present disclosure, and will not be construed as limiting the present disclosure.

In the related art, a projection device can be arranged on the sun visor of a vehicle to increase the function of the sun visor. When the vehicle is stopped, the projection device can project an image to the eyes, that is, the movie can be viewed through the sun visor, and the sun visor has an added entertainment function.

However, the posture may change during viewing, causing the position of the image projected by the projection device to deviate from the field of view area of the eyeball, resulting in a poor viewing experience.

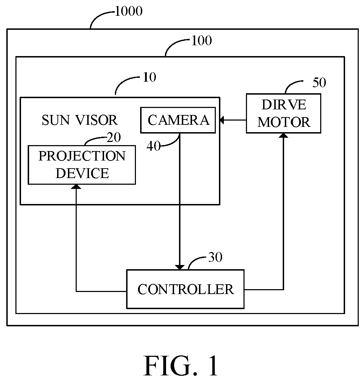

Referring to FIG.1, an embodiment of the present disclosure provides a sun visor system 100 and a vehicle 1000.

In some embodiments, a vehicle 1000 includes a sun visor system 100. The sun visor system 100 includes a sun visor 10, a projection device 20, and a controller 30. The projection device 20 is arranged on the sun visor 10. The controller 30 is configured to identify the position of the eyeballs based on a facial image and adjust the position of the sun visor 10 based on the eyeball position so that the projection device 20 projects an image into the field of view area of the eyeball.

The controller 30 can adjust the position of the projection device according to the eye position so that the projection device 10 projects the image into the field of view area of the eyeball. Even if the posture changes during viewing, the projection device 10 can still project the image into the field of view area of the eyeball, improving the viewing experience.

The field of view area of the eyeball can be an area within the area within the line of sight of the eyeball, for example, an area directly opposite the area within the line of sight of the eyeball. When the projection device 10 projects an image, assuming that the projected image is an image arranged on a plane A, the projection of the eyeball along the line of sight on plane A is the orthographic projection of the eyeball on virtual plane A.

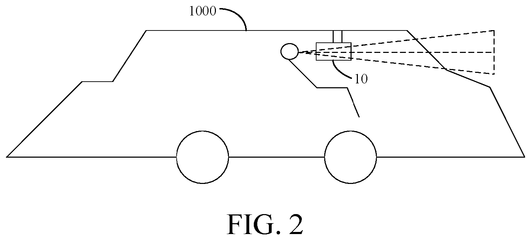

Referring to FIG.2, the sun visor 10 is arranged on the roof of the vehicle 1000, i.e., above the driving seat of the vehicle 1000. The sun visor 10 can be used to block light directed toward the driver's eyes, thereby preventing sunlight or light outside the vehicle from irradiating the driver's eyes.

A projection device 20 is arranged on the sun visor. When the vehicle 1000 stops, the projection device 20 can project images such as videos and movies to the eyes, that is, the movie can be watched through the sun visor 10, and the sun visor 10 has an entertainment function.

In some embodiments, the visor system 100 includes a camera 40 configured to capture an image of a person's face.

Specifically, the camera 40 is arranged on the sun visor 10, and the controller 30 is configured to identify the position of the eyeballs based on the facial image. For example, the camera 40 can capture a real-time image of the driving seat of the vehicle 1000. When the driver is seated in the driving seat of the vehicle 1000, the camera 40 can capture the driver's facial image in real time and obtain the driver's facial image based on the facial image of the driver.

The controller 30 arranged on vehicle 1000, is communicatively connected to camera 40. The camera 40 can transmit facial images to the controller 30. The controller 30 can use image identification methods to identify the facial images and determine the position of the eyeballs. The controller 30 can adjust the position of the sun visor 10 based on the eyeball position, allowing the projection device 20 arranged on the sun visor 10 to project images into the field of view area of the eyeball in real time.

Furthermore, the sun visor 10 may be arranged with a connecting structure. By arranging the connecting structure on the sun visor 10, the sun visor 10 can be movably connected to the vehicle 1000 via the connecting structure. The connecting structure can be a connecting bracket, one end of which is connected to the sun visor 10 via a nut or a rotating shaft, and the other end of which is connected to the roof of the vehicle 1000 via a nut or a rotating shaft. This allows the sun visor 10 to be folded when sun protection is not required and extended when needed.

The controller 30 can adjust the connection structure arranged on the sun visor 10 according to the position of the eyeball, and thereby adjust the position of the sun visor 10. The sun visor 10 can prevent the sun visor 10 from blocking the line of sight, and when the projection device 20 is projecting, the projection can be directly into the eyes, thereby improving the viewing experience.

After the sun visor system 100 is opened, the sun visor 10 is lowered and the projection device 20 is opened. The sun visor 10 and the projection device 20 are automatically adjusted to an initial target position. The initial target position is a pre-set position that can be determined based on the position of the sun visor system 100 and the driving position of the vehicle 1000. In the target position, the projection device 20 arranged on the sun visor system 100 is directly facing the driving position of the vehicle 1000.

After the sun visor 10 and the projection device 20 are adjusted to the initial target position, the controller 30 can further control the drive motor 50 according to the identified position of the eyeball, so that the drive motor 50 drives the position of the sun visor system 100 to change, so that the sun visor system 100 projects the image to the field of view area of the eyeball in real time, thereby improving the viewing experience.

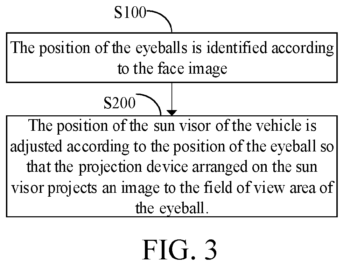

Referring to FIG. 3, the present disclosure also provides a control method. The control method includes:
Step S100: the position of the eyeballs is identified according to the facial image;
Step S200: the position of the sun visor 10 of the vehicle 1000 is adjusted according to the position of the eyeball so that the projection device 20 arranged on the sun visor 10 projects an image to the field of view area of the eyeball.

Specifically, in the step S100, the controller 30 arranged on vehicle 1000, is communicatively connected to camera 40. The camera 40 can send a facial image to the controller 30. The controller 30 can use an image identification method to identify the facial image to determine the position of the eyeballs.

By identifying the driver's facial image, the ROI (region of interest) region of the facial image can be cut to obtain a specific image. When it is necessary to obtain an eye image, the left and right eye images can be obtained based on the eyeball location region of the facial image. The left and right eye images can be used to determine the eyeball location.

Furthermore, the position of the eyeball can be the position of the pupil center of the eyeball, or the position of other points in the eyeball image. The position of the pupil center of the left eye and the position of the pupil center of the right eye, that is, the position of the eyeball, can be determined based on the left eye image and the right eye image.

After obtaining the facial image, the facial image may be subjected to binarization processing and operations such as corrosion and dilation to reduce or avoid noise in the acquired facial image, thereby making the position information of the identified eyeballs more accurate.

In some embodiments, the sun visor system 100 includes a drive motor 50, and the controller 30 is configured to control the drive motor 50 to adjust the position of the sun visor 10 according to the position of the eyeball.

Specifically, the drive motor 50 can drive the connecting structure arranged on the sun visor 10 to move the sun visor 10, thereby changing the position of the sun visor 10.

In the step S200, a corresponding control signal can be sent by the controller 30 to the drive motor 50 according to the identified position of the eyeball to control the running direction of the drive motor 50, and then the position of the sun visor 10 is adjusted. The sun visor 10 can prevent the sun visor 10 from blocking the line of sight, and when the projection device 20 is projecting, it can project the image into the field of view area of the eyeball, thereby improving the viewing experience.

The present disclosure also provides an electronic device including a memory and a processor, wherein the memory is used to store a computer program, and the processor implements the control method of the above embodiment when executing the computer program.

Specifically, a processor can be composed of chips or circuits with data processing capabilities, such as a CPLD (Complex Programmable Logic Device), an FPGA (Field Programmable Gate Array), an MCU (Microcontroller Unit), a PLC (Programmable Logic Controller), and a CPU (Central Processing Unit). Memory can be one or more of ROM (Read Only Memory), RAM (Random Access Memory), a magnetic disk, or an optical disk.

The control method can be implemented by an electronic device. The electronic device can be the controller 30 of the above embodiment, that is, the controller 30 can be used to implement the control method. The controller 30 can be an ECU (electronic control unit) in the vehicle 1000, or a domain controller 30 integrated with multiple ECUs.

Of course, in other embodiments, the control method may be implemented by other devices or equipment, and is not limited to being implemented by the controller 30. The controller 30 may not be dedicated to implementing the control method of the embodiment of the present disclosure, but may implement other functions and methods.

Furthermore, in some embodiments, the controller 30 is configured to control the adjustment direction of the sun visor 10 according to the movement direction of the eyeball.

In some embodiments, the position of the sun visor 10 is adjusted according to the position of the eyeball includes: the adjustment direction of the sun visor 10 is controlled according to the moving direction of the position of the eyeball.

Furthermore, in some embodiments, the controller 30 is specifically configured to: the sun visor 10 controlled to swing along the front and rear directions of the vehicle 1000 according to the up and down movement of the position of the eyeball; and/or the sun visor 10 is controlled to swing along the left and right directions of the vehicle 1000 according to the left and right movement of the position of the eyeball.

In some embodiments, the adjustment direction of the sun visor 10 is controlled according to the movement direction of the eyeball position includes: the sun visor 10 controlled to swing along the front and rear direction of the vehicle 1000 according to the up and down movement of the eyeball position; and/or the sun visor 10 is controlled to swing along the left and right direction of the vehicle 1000 according to the left and right movement of the eyeball position.

When the head is raised or lowered, the position of the eyeball changes. The controller 30 can determine the raising action based on the identified eyeball position, and further determine the change in the eyeball position. Based on the raising action, the controller 30 controls the sun visor 10 to swing forward and backward in the vehicle 1000, so that the projection device 20 arranged on the sun visor 10 projects an image in real time into the field of view area of eyeball.

Specifically, the connection structure arranged on the sun visor 10 can drive the sun visor 10 to swing along the front-rear direction of the vehicle 1000. The drive motor 50 can drive the connection structure arranged on the sun visor 10 to drive the sun visor 10 to swing along the front-rear direction of the vehicle 1000, thereby the sun visor 10 is adjusted to move upward or downward.

If the user looks up while watching a movie, their eyeballs will move upward. The controller 30 can detect this upward eye movement based on the facial image. The controller 30 can then output a control signal to the drive motor 50 to swing the sun visor 10 backward along the vehicle 1000. This causes the drive motor 50 to drive the connecting structure on the sun visor 10 to swing backward along the vehicle 1000. As the sun visor 10 swings backward along the vehicle 1000, the sun visor 10 moves upward, enabling the projection device 20 arranged on the sun visor 10 to project images into the field of view area of eyeball.

If the user looks up while watching a movie, their eyeballs will move downward. At this point, the controller 30 can detect the downward eyeball movement based on the facial image. The controller 30 can output a control signal to the drive motor 50 to swing the sun visor 10 forward along the vehicle 1000. This causes the drive motor 50 to drive the connecting structure beneath the sun visor 10 to swing the sun visor 10 forward along the vehicle 1000. As the sun visor 10 swings forward along the vehicle 1000, the sun visor 10 moves downward, enabling the projection device 20 beneath the sun visor 10 to project images into the field of view area of eyeball.

When the head is turned left or right, the position of the eyeball changes. The controller 30 can determine the head turning action based on the identified eyeball position, and further determine the change in the eyeball position. Based on the head turning action, the controller 30 controls the sun visor 10 to swing left and right of the vehicle 1000, so that the projection device 20 provided on the sun visor 10 projects an image in real time into the field of view area of eyeball.

Specifically, the connection structure arranged on the sun visor 10 can drive the sun visor 10 to swing along the left and right directions of the vehicle 1000. The drive motor 50 can drive the connection structure arranged on the sun visor 10 to drive the sun visor 10 to swing along the left and right directions of the vehicle 1000, thereby the sun visor 10 is adjusted to move left or right.

If the user turns their head to the left while watching a movie, their eyeballs will shift to the left. At this point, the controller 30 can detect the leftward movement of the eyeballs based on the facial image. The controller 30 can then output a control signal to the drive motor 50 to swing the sun visor 10 to the left along the vehicle 1000. This causes the drive motor 50 to drive the connecting structure on the sun visor 10 to swing the sun visor 10 to the left along the vehicle 1000. As the sun visor 10 swings to the left along the vehicle 1000, the position of the sun visor 10 shifts to the left, enabling the projection device 20 arranged on the sun visor 10 to project an image into the field of view area of eyeball.

If a user turns their head to the right while watching a movie, their eyeballs will shift rightward. At this point, the controller 30 can detect rightward eye movement based on the facial image. The controller 30 can then output a control signal to the drive motor 50 to swing the sun visor 10 rightward along the vehicle 1000. This causes the drive motor 50 to drive the connecting structure beneath the sun visor 10 to swing the sun visor 10 rightward along the vehicle 1000. As the sun visor 10 swings rightward along the vehicle 1000, the position of the sun visor 10 shifts rightward, enabling the projection device 20 beneath the sun visor 10 to project an image into the field of view area of eyeball.

In some embodiments, the controller 30 is further configured to identify eye movements based on a facial image, and control the projection device 20 to turn on or off based on the eye movements.

In some embodiments, the control method further includes: eye movements are identified based on the facial image; and the projection device 20 is controlled to turn on or off based on the eye movements.

The projection device 20 can be turned on or off by controlling the movement of the eyeballs, without the need for manual operation to control the projection device 20 to turn on or off, thereby the convenience of operation increased.

Specifically, the controller 30 can determine eye movements based on the facial image and judge the operation intention based on the eye movements. Eye movements such as gazing, eye saccades, eye movements, looking left, looking forward, looking right, or blinking can be executed to control the projection device 20 to turn on or off.

For example, the projection device 20 can be shut down by eye movement. When the position of eye gaze is outside the projection screen of the projection device 20 or when the eye is closed, the controller 30 can determine that the position of eye gaze is outside the projection screen or the eye is closed based on the identified eye position. In this case, it can be assumed that the user is not watching a video, and the controller 30 can control the projection device 20 to stop working and shut down, thus avoiding wasted power.

Furthermore, the controller 30 may also determine the duration of the eye movement execution according to the identified eye position. If the duration of the eye movement execution is long enough, the controller 30 may control the power on or off of the projection device 20 based on the eye movement execution.

For example, when the position of eye gaze is outside the projection screen of the projection device 20 or when the eye is closed, the controller 30 will not immediately control the projection device 20 to shut down. If the position of eye gaze is outside the projection screen of the projection device 20 for a duration of 10 seconds or if the eye is closed for a duration of 10 seconds, the controller 30 controls the projection device 20 to shut down.

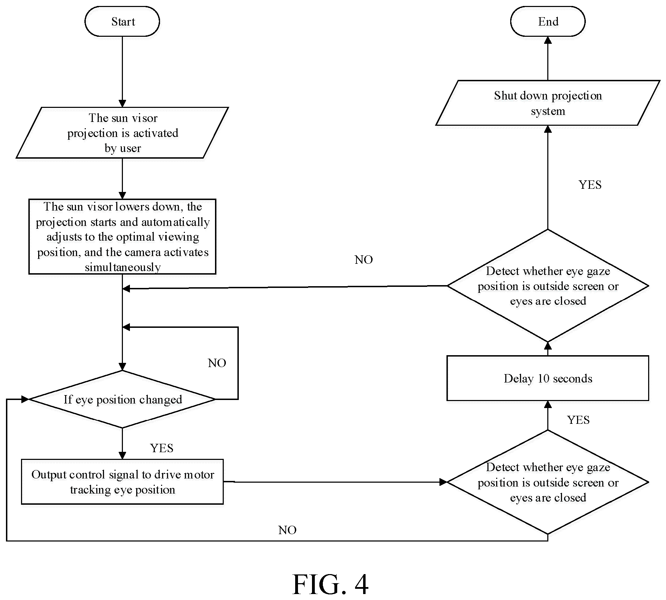

The workflow of the projection device 20 according to the embodiment of the present disclosure can be shown in FIG.4. The sun visor system 100 can be started by an input device, which can be a button or a voice identification module arranged on the sun visor system 100, and can be controlled to start by touching the button or issuing a power-on voice command.

After the sun visor system 100 is opened, the sun visor 10 is lowered and the projection device 20 is opened. The sun visor 10 and the projection device 20 are automatically adjusted to an initial target position. The initial target position is a pre-set position that can be determined based on the position of the sun visor system 100 and the driving position of the vehicle 1000. In the target position, the projection device 20 arranged on the sun visor system 100 is directly facing the driving position of the vehicle 1000.

After the sun visor 10 and the projection device 20 are adjusted to the initial target position, the controller 30 can further control the drive motor 50 according to the identified position of the eyeball, so that the drive motor 50 drives the position of the sun visor system 100 change, so that the sun visor system 100 projects the image to the field of view area of the eyeball in real time, thereby improving the viewing experience.

When the controller 30 detects that the position of eye gaze is outside the projection screen of the projection device 20 or the eye is closed based on the facial image, the controller 30 will not immediately control the projection device 20 to shut down. If the position of eye gaze is outside the projection screen of the projection device 20 for a duration of 10 seconds or if the eye is closed for a duration of 10 seconds, the controller 30 controls the projection device 20 to shut down.

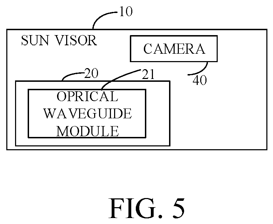

Referring to FIG. 5, in some embodiments, the sun visor system 100 includes an optical waveguide module 21, the projection device 20 is arranged to determine a real information image based on an optical signal received by the optical waveguide module 21, and the projection device 20 is arranged to project the real information image.

Specifically, the optical waveguide module 21 can be a diffraction optical waveguide. The optical waveguide module 21 can include an incoupling grating, a waveguide substrate, and an outcoupling grating. When the projection device 20 is in operation, enters the incoupling grating, is transmitted or reflected by the incoupling grating, enters the waveguide substrate, is transmitted to the outcoupling grating, and is coupled out by the outcoupling grating to enter the eye.

Vehicle 1000 is also arranged with a corresponding visual sensor that can identify road conditions ahead and capture images of the surrounding environment of the vehicle, known as real-world information images. Incident light carrying the real-world information image is projected onto the incoupling grating, where it is transmitted or reflected into the waveguide substrate. It is then transmitted to the outcoupling grating and coupled out by the outcoupling grating before entering the eye.

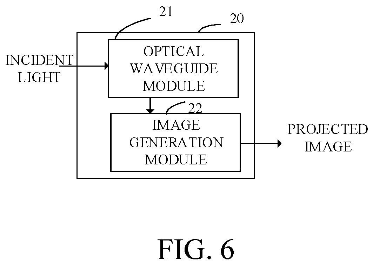

Referring to FIG. 6, in some embodiments, the projection device 20 includes an image generation module 22, which is configured to generate a virtual image. The image generation module 22 is configured to fuse the real information image and the virtual image to obtain a fused image, and the projection device 20 is configured to project the fused image.

Specifically, the image generation module 22 may include a graphics processing unit (GPU), and the image generation module 22 may be used to generate images required for projection.

The image generation module 22 can generate a virtual image. The image generation module 22 can also generate a corresponding real image based on the optical signal received by the optical waveguide module 21. The projection device 20 can project the virtual image generated by the image generation module 22, or the generated real image.

Augmented reality (AR) technology integrates virtual information with the real world, enabling precise integration of virtual interactive images with real-world scenes. Image generation module 22 can also fuse real-world information images and virtual images based on AR technology to produce a fused image. This fused image has special animation rendering effects, allowing the driver to directly see a three-dimensional (3D) image of the surrounding environment of the vehicle 1000, with the image clearly projected to their eyes.

In some embodiments, the sun visor system 100 includes a sun visor, and the projection device 20 also includes an image generation module 22, which is configured to generate a virtual image. When the sun visor isolates the optical wave signal received by the optical waveguide module 21, the projection device 20 is configured to project the virtual image.

Specifically, the light shield can be used to isolate the optical signals received by the optical waveguide module 21. The light shield can cover the coupling grating of the optical waveguide module 21, preventing ambient light from entering the coupling grating. The image generation module 22 cannot generate a corresponding real information image based on the optical wave signals received by the optical waveguide module 21. In this case, the image projected by the projection device 20 can be a virtual image generated by the image generation module 22.

An embodiment of the present disclosure provides a computer-readable storage medium, which is used to store a computer program. When the computer program is executed by a processor, it implements the control method of any of the above embodiments.

Specifically, the storage medium may be any medium that can store computer programs, such as a ROM (Read Only Memory), a RAM (Random Access Memory), a magnetic disk, or an optical disk.

In the description of this specification, the descriptions with reference to the terms "particularly", "further", "particularly", "understandably", etc. are intended to mean that the specific features, structures, materials or characteristics described in conjunction with the embodiments or examples are included in at least one embodiment or example of the present disclosure. In this specification, the schematic expressions of the above terms are not intended to refer to the same embodiment or example. Moreover, the specific features, structures, materials or characteristics described may be combined in any one or more embodiments or examples in a suitable manner. In addition, those skilled in the art may combine and combine the different embodiments or examples described in this specification and the features of the different embodiments or examples, unless they are contradictory.

Any process or method description in a flowchart or otherwise described herein will be understood to represent a module, segment or portion of code comprising one or more executable instructions for implementing the steps of a specific logical function or process, and the scope of the preferred embodiments of the present disclosure includes alternative implementations in which functions may be performed out of the order shown or discussed, including performing functions in a substantially simultaneous manner or in the reverse order depending on the functions involved, which will be understood by those skilled in the art to which the embodiments of the present disclosure belong.

Although the embodiments of the present disclosure have been shown and described above, it will be understood that the above embodiments are exemplary and will not be understood as limitations on the present disclosure. Ordinary technicians in this field can change, modify, replace and modify the above embodiments within the scope of the present disclosure.

## Claims

1. A sun visor system for a vehicle, comprising:
a sun visor;
a projection device, the projection device being arranged on the sun visor;
a controller configured to identify the position of an eyeball according to a facial image and adjust a position of the sun visor according to the position of the eyeball so that the projection device projects an image onto a field of view area of the eyeball.

2. The sun visor system according to claim 1, wherein: the sun visor system comprises a camera configured to acquire the facial image.

3. The sun visor system according to claim 1, wherein: the controller is configured to control an adjustment direction of the sun visor according to a movement direction of the position of the eyeball.

4. The sun visor system according to claim 3, wherein: the controller is specifically configured as follows:
the sun visor is controlled to swing along the front-rear direction of the vehicle according to the up-and-down movement of the position of the eyeball; and/or
the sun visor is controlled to swing along the left and right directions of the vehicle according to the left and right movement of the position of the eyeball.

5. The sun visor system according to claim 1, wherein: the controller is further configured to identify the movement of the eyeball according to the facial image, and control the projection device to turn on or off according to the movement of the eyeball.

6. The sun visor system according to claim 1, wherein: the sun visor system comprises a drive motor, and the controller is configured to control the drive motor to adjust the position of the sun visor according to the position of the eyeball.

7. The sun visor system according to claim 1, wherein: the sun visor system comprises an optical waveguide module, the projection device is configured to determine a real information image according to an optical signal received by the optical waveguide module, and the projection device is configured to project the real information image.

8. The sun visor system according to claim 7, wherein: the projection device comprises an image generation module, the image generation module is configured to generate a virtual image, the image generation module is configured to fuse the real information image and the virtual image to obtain a fused image, and the projection device is configured to project the fused image.

9. The sun visor system according to claim 7, wherein: the sun visor system comprises a sun visor, and the projection device further comprises an image generation module, which is configured to generate a virtual image, when the sun visor isolates the optical wave signal received by the optical waveguide module, the projection device is configured to project the virtual image.

10. A control method for a vehicle, wherein: the control method comprising:
the position of the eyeballs is identified based on a facial image;
the position of the sun visor of the vehicle is adjusted according to the position of the eyeball so that the projection device arranged on the sun visor projects the image to the field of view area of the eyeball.

11. The control method according to claim 10, wherein: the position of the sun visor adjusted according to the position of the eyeball comprises:
the adjustment direction of the sun visor is controlled according to the moving direction of the position of the eyeball.

12. The control method according to claim 11, wherein: the adjustment direction of the sun visor controlled according to the movement direction of the eyeball position comprises:
the sun visor is controlled to swing along the front-rear direction of the vehicle according to the up-and-down movement of the position of the eyeball; and/or
the sun visor is controlled to swing along the left and right directions of the vehicle according to the left and right movement of the position of the eyeball.

13. The control method according to claim 10, wherein: the control method further comprises:
eye movements are identified based on the facial image;
the projection device is controlled to be turned on or off according to the movement of the eyeball.

14. An electronic device, wherein: the electronic device comprising a memory and a processor, the memory is used to store a computer program, and the processor implements the control method according to any one of claims 10 to 13when executing the computer program.

15. A vehicle, wherein: the vehicle comprising the sun visor system according to any one of claims 1 to 9, or the electronic device according to claim 14.

16. A computer-readable storage medium, wherein: the computer-readable storage medium is used to store a computer program, and when the computer program is executed by a processor, the control method according to any one of claims 10 to 13is implemented.
